# EUROPEAN PATENT SPECIFICATION

(11) **EP 3 935 541 B1**
(45) Date of publication and mention of the grant of the patent: **28.05.2025**
(21) Application number: 20721449.5
(22) Date of filing: 09.04.2020
(51) Int. Cl.: G06F 21/55, G06F 21/64, H04L 9/32, H04L 9/00

(54) **VALIDATION OF MEASUREMENT DATA SETS USING ORACLE CONSENSUS**
VALIDIERUNG VON MESSDATENSÄTZEN MITTELS ORACLE-KONSENS
VALIDATION D'ENSEMBLES DE DONNÉES DE MESURE À L'AIDE DE CONSENSUS ORACLE

(30) Priority: 15.04.2019 EP 19169157
(43) Date of publication of application: 12.01.2022
(73) Proprietor: Siemens Aktiengesellschaft, 80333 München (DE)
(72) Inventor: KEPKA, Alexander, 90427 Nürnberg (DE); BÖLDERL-ERMEL, Wolfgang, 90530 Wendelstein (DE)
(74) Representative: Siemens Patent Attorneys
(86) International application number: PCT/EP2020/060241
(87) International publication number: WO 2020/212265

(56) References cited:
- WO-A1-2019/064658
- US-A1- 2019 087 571

## Description

The invention relates to a method of validating a measurement dataset. Various examples of the invention specifically relate to validating measurement datasets using one or more validation measures implemented at a distributed database, such as a blockchain.

Distributed databases - such as the blockchain - offer increased security against manipulation of data. Thus, various functionality - e.g., sense and control functionality in industrial environments, control of electrical grids, transport systems, etc. - relies on data stored in a distributed database.

Various functionality relying on data stored in the distributed database can be event driven. I.e., one or more functionalities can be triggered by and/or depend on events external to the distributed database, i.e., based on external data. To this end, measurement devices, sometimes also referred to as oracles, are known. Oracles can provide measurement datasets indicative of one or more observables of an event. Then, the measurement datasets can be stored in the distributed database. Logic functionality can depend on these measurement datasets.

The validity/integrity of measurement datasets can sometimes be compromised. This can be due, e.g., a malfunctioning oracle or fraud. Such limited validity of the measurement datasets can also compromise the integrity of the data stored in the distributed database or any functionality depending on the measurement dataset.

Accordingly, there is a need for techniques of validating measurement datasets. In particular, there is a need for techniques which overcome or mitigate at least some of the above-identified restrictions and drawbacks.

This need is met by the features of the independent claims. The features of the dependent claims define embodiments.

US 2019/087571 Al teaches using a redundant set of sensors to identify attacks on a cyber-physical system. Two sets of measurements are collected from two sets of sensors and evaluated for consistency using a "smart contract" running in a blockchain setting. Conditional on the requisite consensus among entities performing such consistency checks being reached, a corresponding entry is entered into a blockchain.

WO 2019/064658 Al teaches securing a fluid distribution system by having a blockchain-based system evaluate data collected from multiple sensors for consistency prior to appending new blocks to a blockchain ledger.

A node includes a communication interface and at least one processor. The at least one processor is configured to: obtain, via the communication interface and from a first oracle, a first measurement dataset indicative of one or more first observables of an event; and to obtain, via the communication interface and from a second oracle, a second measurement dataset indicative of one or more second observables of the event, wherein the one or more first observables are different from the one or more second observables; and to trigger a comparison between the first measurement dataset and the second measurement dataset; and depending on a result of the comparison, to selectively trigger one or more validation measures for at least one of the first measurement dataset or the second measurement dataset, the one or more validation measures being implemented at a distributed database, wherein the one or more validation measures comprise storing a variable indicative of at least one of the results of the comparison, the first measurement dataset, and the second measurement dataset in the distributed database and the first measurement device checking the variable.

A method includes capturing a second measurement dataset at a second oracle. The method also includes obtaining a first measurement dataset at the second oracle. The second measurement dataset is indicative of one or more second observables of an event. The first measurement dataset is indicative of one or more first observables of the event, wherein the one or more first observables are different from the one or more second observables. The first measurement dataset is provided by a first oracle. The method also includes performing a comparison between the first measurement dataset and the second measurement dataset, at the second oracle. The method also includes selectively triggering one or more validation measures for the first measurement dataset and/or the second measurement dataset, depending on a result of the comparison. The one or more validation measures are implemented at a distributed database, wherein the one or more validation measures comprise storing a variable indicative of at least one of the results of the comparison, the first measurement dataset, and the second measurement dataset in the distributed database and the first measurement device checking the variable.

An oracle includes a communication interface and at least one processor. The at least one processor is configured to obtain, via the communication interface and from a further oracle, a first measurement dataset indicative of one or more first observables of an event; capture a second measurement dataset indicative of one or more second observables of the event; perform a comparison between the first measurement dataset and the second measurement dataset; and depending on a result of the comparison, selectively trigger one or more validation measures for at least one of the first measurement dataset or the second measurement dataset, the one or more validation measures being implemented at a distributed database.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory unit" or "memory module" or the like can be implemented by a volatile memory in the form of random access memory (RAM) or a non-volatile memory such as a hard disc or data carrier.

A "module", in the context of the present disclosure, can be implemented by a processor and/or a memory unit for storing program instructions. A module can be implemented in hardware and/or software and/or firmware. For example, the processor can be configured to execute the program instructions such that the processor executes functions that implement methods or steps of a method as described herein. A module can also be a node of a distributed database (DBS) that implements specific functions/features of the respective module. The respective modules can, e.g., be implemented as separate/individual modules. For this, the respective modules can include further elements. For example, these further elements can be one or more interfaces (e.g., database interfaces, communication interfaces - e.g., a network interface or WLAN interface) and/or an evaluation unit (e.g., a processor) and/or a memory unit. By means of the interfaces, it is possible to exchange data (e.g., to receive, communicate, transmit or provide data). By means of an evaluation unit, it is possible to compare, validate, process, assign or calculate data in a computer-implemented and/or automated manner. By means of the memory unit, data can be stored, retrieved or provided in a computer-implemented and/or automated manner. It would also be possible that multiple modules are implemented by a common processor.

The term "include" - specifically with respect to data and/or information - can relate to a (computer-implemented) storing of respective information or the respective date in a data structure/data set (which, e.g., in turn is also stored in a memory unit) in the context of the present disclosure.

The term "assign" - specifically in relation to data and/or information - can relate to a computer-implemented assignment of data and/or information in connection with the present disclosure. For example, a first date is assigned, by means of a memory address or a unique identifier, a second date, e.g., by storing the first date together with the memory address or the unique identifier of the second date in a data set.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain or the DBS (respectively of the corresponding infrastructure) in the context of the present disclosure.

A "smart-contract process" or "smart-contract functionality" can refer to the execution of program code, e.g., of a control instruction, in a process by means of the DBS or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a DBS or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the DBS. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the DBS testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a DBS indicates or references to a preceding data block of the DBS - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the DBS; to thereby chain a new data block with a (existing) data block of the DBS. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the DBS includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described. The data - that is, e.g., stored in or written to a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the DBS, a transaction checksum of a data block of the respective data, e.g., of the DBS or of another database, or a data checksum determined across the data can be used.

In addition, the respective transaction can optionally include a link to or an indication of a memory position - e.g., an address of a file server and indications where the respective data are to be found on the file server; or an address of another DBS which includes the data. The respective data could, e.g., also be provided in a further transaction of a further data block of the DBS - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain or of the DBS.

The term "security protected" can, specifically, relate to a protection that can be implemented by a cryptographic method. For example, this can be implemented by using a DBS for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a DBS can include chaining of data blocks of a DBS. The term "chaining of data blocks of a DBS" in the connection of the present disclosure can relate to the data blocks respectively including information (such as the chaining checksum) which links to another data block or multiple other data blocks of the DBS [1], [4], [5].

Insertion of transactions into a DBS can include saving the transactions in one or more data blocks of the DBS.

Insertion of transactions can include validating and/or confirming transactions.

The term "insertion of transactions into the DBS" or "writing of data to the DBS" and the like can relate to communicating a transaction or transactions or a data block including the transactions to one or more nodes of a DBS. If those transactions are successfully validated, e.g., by means of the one or more nodes, these transactions can be chained as a new data block with at least one existing data block of the DBS [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the DBS.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the DBS or the respective transaction of the DBS including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the DBS".

A "program code" - such as a smart contract - can relate to a program instruction or multiple program instructions which are saved in one or more transactions, in connection with the present disclosure. The program code can be executable and can be executed, e.g., by the DBS. This can be implemented, e.g., by a runtime environment, e.g., of a virtual machine, wherein the runtime environment or the program code are preferably Turing complete. The program code is preferably executed by the infrastructure of the DBS [4], [5]. Here, a virtual machine is implemented by the infrastructure of the DBS. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the DBS - e.g., a blockchain -, e.g., in a data block of the DBS. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "DBS", which can also be referred to simply as "distributed database", can generally relate to a decentralized, distributed database, a blockchain, a distributed ledger, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a DBS that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a DBS can relate to a public DBS (e.g., a public blockchain) or a closed (private) distributed databased system (e.g., a private blockchain).

For example, in the case of a public DBS, the nodes and/or devices can join the DBS without proof of authorization or authentication or login credentials, respectively be accepted by the DBS without such information. In particular, in such a case the operator of the nodes and/or devices can remain anonymous.

For example, in the case of implementation of the DBS by a closed database system, new nodes and/or devices can require a valid proof of authorization and/or valid authentication information and/or valid credentials and/or valid login information to join the DBS or be accepted by the DBS.

A DBS can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a DBS - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the DBS. Thereby, it is possible to implement blockless DBS such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the DBS, such that they are, in particular, saved in a secured manner. For this the transactions can be chained by means of a chaining checksum, e.g., by using a separate checksum or the transaction checksum of one or more transactions as chaining checksum, which is saved in a new transaction in the DBS when storing the new transaction in the DBS. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the DBS" can relate, in connection with the present disclosure, e.g., to the data block of the DBS that is a direct predecessor of the (given) data block. Alternatively, the term "preceding data blocks of a (given) data block of the DBS" can also relate to all data blocks of the DBS that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of a DBS" and the like can relate, in the context of the present disclosure, to devices - e.g., mobile devices, wireless communication devices, computers, smartphones, clients or participants - that perform operations associated with the DBS, e.g., a blockchain [1], [4], [5]. Such nodes can, e.g., execute transactions of a DBS or the respective data blocks or can insert new data blocks including new transactions into the DBSs by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the DBS. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the DBS. Thereby, the devices can be mobile devices or devices of the Internet of things, that can also be nodes of the DBS. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the DBS, e.g., of the blockchain, i.e., do not execute operations of the DBS or simply retrieve those without executing transactions, inserting data blocks or calculate proof of works. Alternatively, the term "computer" or "device" can also relate to a node of the DBS. In other words, a device can in particular implement a node of the DBS or a device outside of the blockchain and the DBS, respectively. A device outside of the DBS can, e.g., access the data - e.g., the transactions or the control transactions - of the DBS. A device outside of the DBS can be controlled by nodes - e.g., by means of smart contracts and/or blockchain oracles. For example, if a control of a device - e.g., a device implemented as a node or a device outside of the DBS - is implemented by a node, then this can occur via a smart contract which, in particular, is saved in a transaction of the DBS.

### List of citations

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system according to various examples, the system including multiple oracles and a blockchain infrastructure.
FIG. 2 is a flowchart of a method according to various examples.
FIG. 3 is a functional flowchart including signaling according to various examples.
FIG. 4 is a functional flowchart including signaling according to various examples.
FIG. 5 is a flowchart of a method according to various examples.
FIG. 6 is a functional flowchart including signaling according to various examples.
FIG. 7 is a functional flowchart including signaling according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques are described that facilitate validating measurement datasets provided by oracles. As a general rule, oracles can be implemented by hardware oracles and/or software oracles. A hardware oracle can measure - e.g., using a sensor - one or more physical observables of a physical event. Examples would include measurement of electrical characteristics, e.g., electrical current or electrical voltage, fluid flow or fluid volume, pressure, temperature, operational activity of an industrial machine such as oil change, operating mode, switch on/switch off, etc.; logistics such as dispatch, waypoint passing, delivery, etc. Software oracles can provide measurement data indicative of software-defined events, e.g., website updates, data availability, service downtime, etc.

Various examples described herein facilitate validating a given measurement dataset based on a consensus between (i) the one or more observables of the given measurement datasets associated with a given event, and (ii) one or more observables of one or more further measurement datasets, also associated with the same given event. Thereby, independent or largely independent information on one and the same event can be obtained and a respective comparison between these measurement datasets can be triggered. Based on the result of the comparison it would then be possible to trigger or to not trigger (selectively trigger) one or more validation measures for the measurement datasets. These one or more validation measures can be implemented at a distributed database.

Such techniques are based on the finding that by using independent or largely independent measures for one and the same given event, it becomes possible to identify malfunctioning or fraud associated with an oracle. Thus, the trust level for the measurement datasets can be increased.

As a general rule, various options are available for implementing the validation measures. To give a few examples, the validation measures can include validating or invalidating the measurement datasets. For example, a variable may be stored in the distributed database, wherein the variable is indicative of the positive or negative result of the comparison. It would also be possible that the variable is indicative of the underlying measurement datasets, i.e., it would be possible that the measurement datasets are selectively stored in the distributed database, depending on the result of the comparison. Further, in case of lack of consensus, it would be possible to inform involved stakeholders accordingly, i.e., one or more nodes that would rely on the measurement datasets.

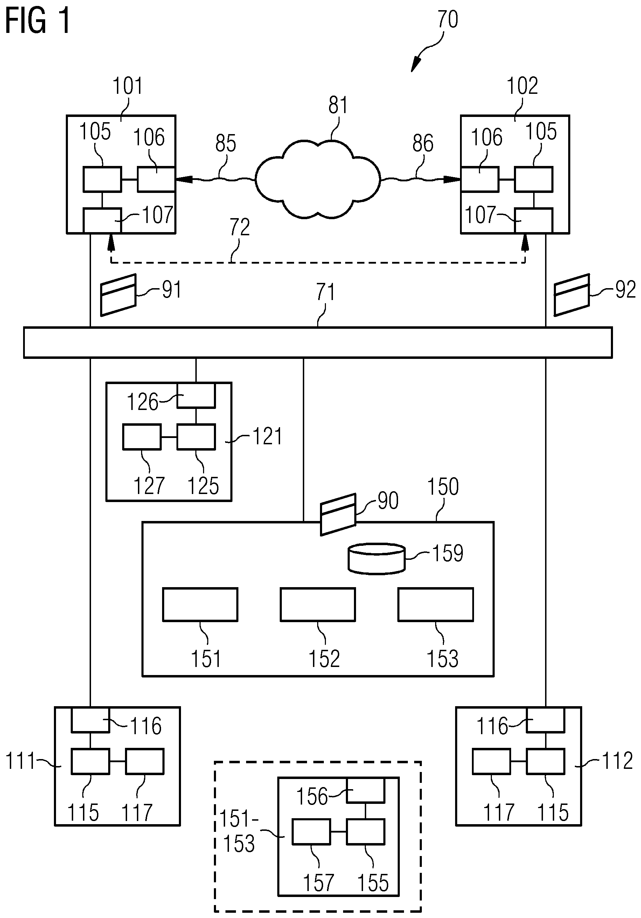

FIG. 1 schematically illustrates a system 70.

The system 70 includes oracles 101, 102. Each one of the oracles 101, 102 includes a control circuitry 105. For example, the control circuitry 105 could include a processor and a non-volatile memory. The processor could load program code from the non-volatile memory and execute the program code to perform various functionality such as: measuring data for a measurement dataset indicative of one or more physical observables of an event; transmitting the measurement dataset; processing raw data of the measurement dataset; implementing or triggering a comparison between the measurement dataset and further measurement dataset from another oracle, to validate the measurement dataset, etc.

In further detail, as illustrated in FIG. 1, each one of the oracles 101, 102 includes an input interface 106, e.g., a sensor for a hardware oracle or a communication interface for a software-implemented input interface. The input interfaces 106 of the oracles 101, 102 are configured to measure observables 85, 86 of an event 81.

As a general rule, the event 81 could be a physical event and the observables 85, 86 could be physical observables. It would also be possible that the event 81 is a software event, that the observables 85, 86 would correspond to software observables 85, 86.

The oracles 101, 102 can provide respective measurement dataset 91, 92 to a network 71. The measurement dataset 91 provided by the oracle 101 is indicative of the observable 85 of the event 81; while the measurement dataset 92 provided by the oracle 102 is indicative of the observable 86 of the event 81. In particular, it would be possible that the observable 85 differs from the observable 86. More generally speaking, different oracles can provide measurement datasets that are indicative of different observables. For example, a first oracle could provide measurement datasets indicative of a temperature; while a second oracle provides measurement datasets indicative of pressure, to give just one example. Thereby, independent information and multiple measures of the event 81 can be obtained. This helps to validate the measurement datasets 91, 92.

As illustrated, in FIG. 1, the oracles 101, 102 are also directly connected via a backbone communication line 72. This is generally optional. For example, it would be possible that the oracles 101, 102 are arranged next to each other, because they observe the same event 81. For example, the oracle 101 and the oracle 102 may be arranged in the same apparatus or machine. In such scenarios, close-range communication may be used to implement the backbone communication line 72. As a general rule, a data throughput of the backbone communication line 72 may be higher than a data throughput of the communication network 71. As a further general rule, a downtime/service availability may be better for the backbone communication line 72 if compared to the downtime/data availability of the communication network 71.

Because the network 71 can have a limited data throughput, sometimes it is not feasible to include raw measurement data in the measurement datasets 91, 92. Rather, some data compression or data pre-processing may be implemented at the oracles 101, 102, respectively, before transmitting the measurement datasets 91, 92 towards the communication network 71.

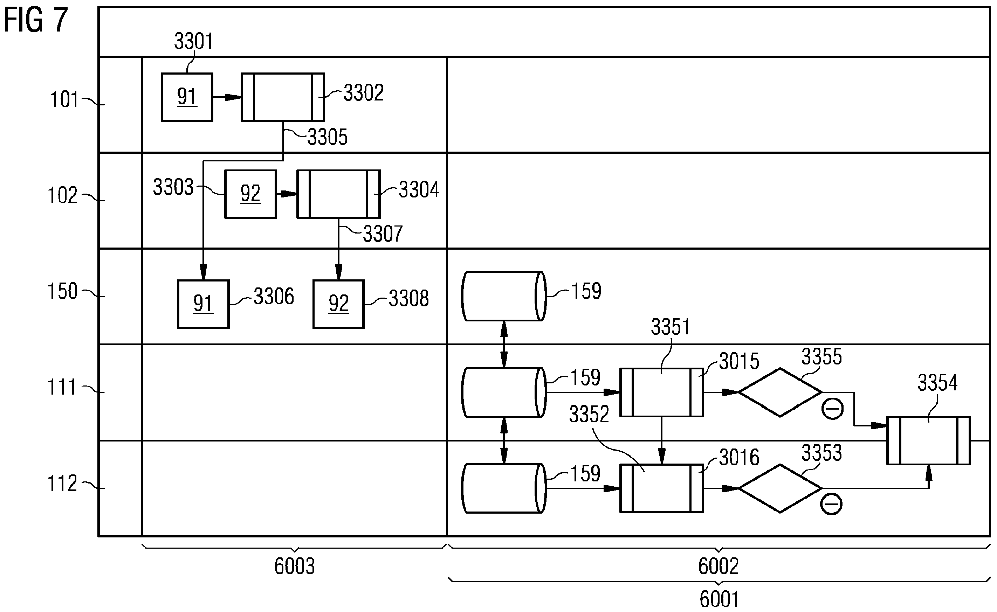

In the example of FIG. 7, the communication network 71 is also connected to a distributed database infrastructure 150. The distributed database infrastructure 150 includes multiple mining nodes 151-153 that store and access a distributed database 159. For example, a smart contract 90 may be implemented on the distributed database 159.

Hereinafter, various examples will be described in connection with an implementation of the distributed database 159 as blockchain. However, in other examples, the distributed database 159 may be implemented in another manner, e.g., by a blockless distributed database, etc.

Each one of the mining nodes 151-153 can attempt to store variables as transactions in the blockchain 159. The smart contract 90 can define self-executable program code; to this end, the mining nodes 151-153 can provide the host environment to execute such program code.

The system 70 also includes stakeholder nodes 111, 112. Each stakeholder nodes 111, 112 includes a processor 115 that can load and execute program code stored by a respective non-volatile memory 117. The stakeholder nodes 111, 112 are connected to the networks 71 via respective interfaces 116.

The stakeholder nodes 111, 112 may be operated by an operator that relies on functionality implemented by, e.g., the smart contract 90 of the blockchain 159. Corresponding functionality may rely on the validity of the measurement datasets 92. Therefore, each one of the stakeholder nodes 111-112 is associated with an operator that has an interest in the validation of the measurement datasets 91, 92.

In the example of FIG. 1, the system 70 also includes a third-party node 121. For example, the third-party node 121 could implement supervisory control and data acquisition (SCADA) functionality. The third-party node includes - in a manner comparable to the stakeholder nodes 111, 112 - a processor 125 that can load and execute program code from a non-volatile memory 127. The third-party node 121 is connected to the network 71 via an interface 126. The third-party node 121 is operated by an operator independent of the operators of the stakeholder nodes 111-112. Sometimes such an independent operator is referred to a central authority.

The inset of FIG. 1 also illustrates details with respect to the mining nodes 151-153 of the blockchain infrastructure 150 (the inset in FIG. 1 is illustrated with the dashed lines). Each one of the mining nodes 151-153 includes a processor 155. The processor 155 can load program code from a memory 157 and can execute the program code. The processor 155 can communicate, via an interface 156, e.g., with the network 71. Each one of the mining nodes 151-153 may store a replica of the blockchain 159.

Next, details with respect to the functioning of the system 70 will be explained in connection with the following FIGs.

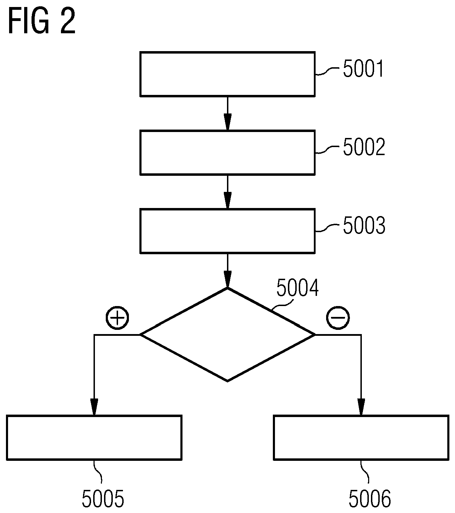

FIG. 2 is a flowchart of a method according to various examples. The method of FIG. 2 may be executed by the processor 125 of the third-party node 121, upon loading respective program code from the memory 127. It would also be possible that the method of FIG. 2 is executed by the processor 155 of one of the mining nodes 151-153, upon loading respective program code from the memory 157.

At block 5001, a first measurement dataset is obtained. The first measurement dataset is indicative of one or more observables of an event provided by a first oracle. For example, the measurement dataset 91 could be obtained from the oracle 101 and the measurement dataset 91 could be indicative of the physical observable 85 of the event 81 (cf. FIG. 1).

At block 5002, a second measurement dataset is obtained. The second measurement dataset is indicative of one or more second observables of the event, i.e., the same event for which at block 5001 the first measurement data is obtained. The second measurement data is provided by a second oracle. For example, the measurement dataset 92 could be obtained from the oracle 102, wherein the measurement dataset 92 is indicative of the observable 86 of the event 81 (cf. FIG. 1).

Next, at block 5003, a comparison between the first measurement dataset - obtained at block 5001 - and the second measurement dataset - obtained at block 5003 - is triggered.

Block 5003 could include sending a trigger or request message to execute the comparison. Block 5003 could also include executing the comparison locally, e.g., at the third-party node 121 or the respective mining node 151-153. For example, block 5003 could include invoking a corresponding function of a smart contract of a blockchain, e.g., invoking a corresponding function of the smart contract 90 of the blockchain 159 (cf. FIG. 1). In such a scenario, the comparison, in other words, is provided by a smart contract. In other examples, the comparison could be implemented locally at the third-party node 121.

As a general rule, various options are available for implementing the comparison at block 5003. The comparison can vary along with the type of measurement dataset and, more specifically, with the type of observables indicated by the first and second measurement datasets obtained in block 5001 and 5002. To give an example, it would be possible that the comparison is based on a predefined agreement indicative of a metric of the comparison. The metric can define a ruleset for comparing the various involved measurement datasets and the various involved physical observables. In particular, using an appropriate metric, it is even possible to compare different observables, e.g., temperature with pressure, or operational statistics of a field device with current consumption, to give just a few examples. In some examples, the comparison could be implemented by a machine-learning algorithm that is trained to detect abnormalities in the behavior of the multiple physical observables. In other examples, a predefined rule set could be analytically defined.

For example, a tolerance range could be defined by the metric. The tolerance range may specify certain acceptable ranges of deviation between the first measurement dataset and the second measurement dataset.

Alternatively or additionally, it would be possible that the metric is based on a time shift between capturing of the one or more first observables indicated by the first measurement data and the capturing of the one or more second observables indicated by the second measurement dataset. Such techniques can be based on the finding that an increased time shift can limit the possibility of (cross-)validating the first measurement data and the second measurement data, respectively.

Next, at block 5004, a result of the comparison is checked. Depending on the result of the comparison, one or more - positive or negative - validation measures are selectively triggered at block 5005 or 5006, respectively. The one or more validation measures pertain to the first measurement dataset and/or the second measurement dataset. In particular, the one or more validation measures can be implemented at the blockchain, e.g., at the blockchain 159.

In detail, if at block 5004 it is judged that the comparison yields a positive result, i.e., a (cross-)validation of the first measurement dataset and the second measurement dataset is positively obtained, then a positive validation measured can be taken at block 5005; otherwise, a negative validation measure can be taken at block 5006.

As a general rule, various options are available for implementing positive and negative validation measures, e.g., in connection with blocks 5005 and 5006. To give just a few examples, a positive validation measure that could be taken as part of executing block 5005 could pertain to storing the first measurement data and/or the second measurement data in the blockchain, e.g., in the blockchain 159. It would also be possible that a flag indicator is appropriately set, the flag indicator being stored in the blockchain, e.g., the blockchain 159. The flag indicator could indicate whether a (cross-)validation was successful or not. Yet another validation measure may include transmitting a corresponding report message to at least one of the stakeholder nodes 111, 112. Thereby, parties interested in the validation can be appropriately informed.

In case the comparison yields a negative result, it would be possible to trigger, as part of execution of block 5006, a settlement process. The settlement process can include a predefined rule set or workflow for the case of a deviation between the first measurement dataset and the second measurement dataset. For example, the settlement could be associated with a trust level of the first oracle providing the first measurement dataset and/or the trust level of the second oracle providing the second measurement dataset. Then, if there are deviations between the first measurement dataset and the second measurement dataset, the particular measurement dataset may prevail that has the larger associated trust level.

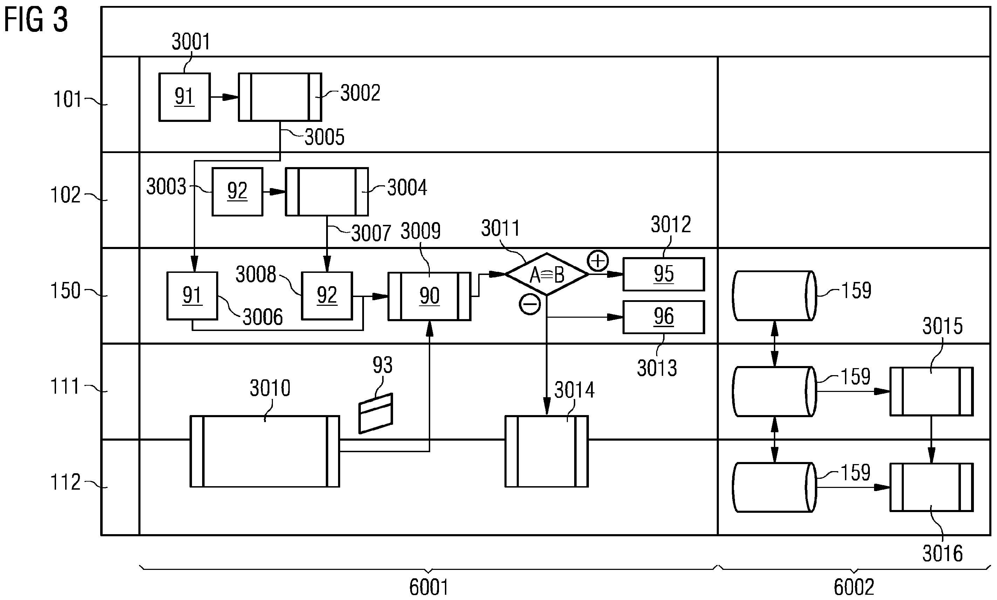

FIG. 3 is an signaling flowchart illustrating the functioning of the system 70. For example, the signaling in accordance with FIG. 3 could implement the method of FIG. 2, in particular when executed by the infrastructure 150.

At block 3001, the oracle 101 captures the measurement dataset 91 that is indicative of the observable 85 of the event 81.

As a general rule, measurement datasets as described herein may include a time series of measurement data points. For example, the oracles may sample the events by capturing multiple data points with a certain sampling rate. Some pre-processing of this raw data may occur, when generating the corresponding measurement dataset. For example, filters such as a low-pass filter may be applied. Measurement data points may be integrated.

At block 3002, the measurement dataset is digitally signed, to generally provide a security protection. For example, this can be implemented using cryptographic keying material associated with the oracle 101. A public-private keying material configuration could be used.

Blocks 3003 and 3004 respectively corresponding to blocks 3001 and 3002, but for the oracle 102 and the measurement dataset 92.

Next, the oracle 101 triggers storing the measurement dataset 91 in the blockchain 159. For this, a corresponding request can be transmitted to the blockchain infrastructure 150, e.g., to one or more of the mining nodes 151-153. One or more of the mining nodes 151-153 can then create a new block to be changed with pre-existing blocks of the blockchain 159, the new block including a variable that includes or is indicative of the measurement dataset 91, see block 3006. This can include solving a cryptographic puzzle, e.g., proof-of-work or proof-of-stake.

Blocks 3007 and 3008 respectively correspond to blocks 3005 and 3006, but for the oracle 102 and the measurement dataset 92.

Next, the comparison between the measurement dataset 91 and the measurement dataset 92 is performed. This includes, at block 3009, the smart contract 90 performing a look-up for the variables associated with the measurement dataset 91 and the measurement dataset 92 and applying a predefined metric 93 thereto. The predefined metric 93 can be obtained through a negotiation at 3010 between the stakeholder nodes 111, 112. The metric 93 defines how the measurement dataset 91 and the measurement dataset 92 are compared and what criteria of consensus of the oracles 101, 102 are.

Next, at block 3011, the result of the comparison in accordance with block 3009 is checked. Again, this can be functionality that is implemented by the smart contract 90. Block 3011, as such, corresponds to block 5004 (cf. FIG. 2).

In case of a positive result of the comparison - i.e., consensus between the oracles 101, 102 -, a corresponding variable 95 is written to the blockchain 159, at block 3012. This variable 95 is indicative of the consensus, i.e., the positive result of the comparison. Otherwise, at block 3013, a corresponding variable 96 indicative of the lack of consensus is written to the blockchain 159.

In block 3014, a warning or notification can be triggered, as a settlement process. The warning is issued to the stakeholder nodes 111, 112.

The various blocks 3001-3013 that have been explained so far correspond to a capturing phase 6000 and a validation phase 6001. During the capturing phase 6000, the measurement datasets 91, 92 are captured at the oracles 101, 102. During the validation phase 6001, it can be checked whether consensus exists between the measurement datasets 91, 92 provided by the oracles 101, 102.

As will be appreciated, in the scenario of FIG. 3 it is possible to implement the validation phase 6001 in a close temporal relationship with the capturing phase 6000 of the measurement datasets 91, 92. This has the advantage that un-validated measurement datasets 91, 92 can timely be identified. The trust level of the various entries in the blockchain 159 can be high. For example, in case a lack of consensus is identified timely after capturing the measurement datasets 91, 92, various counter-measures may be available to the settlement process (that may not be available if the lack of consensus is only identified later). For example, an alternative oracle may be deployed. For example, a measurement dataset may be re-captured. For example, maintenance of the oracles 101, 102 may be triggered.

FIG. 3 also illustrates aspects with respect to an application phase 6002 in which the measurement datasets 91, 92 are used for further processing. Here, the various measurement datasets 91, 92 can be retrieved from the blockchain 159. It is then possible to implement certain functionality based on the measurement datasets 91, 92 at blocks 3015 and 3016, at the stakeholder nodes 111, 112. Each stakeholder associated with a stakeholder node 111, 112 can trust in the correctness of the measurement datasets 91, 92 for executing the respective functionality at blocks 3015, 3016, respectively, because of the validation during the validation phase 6001.

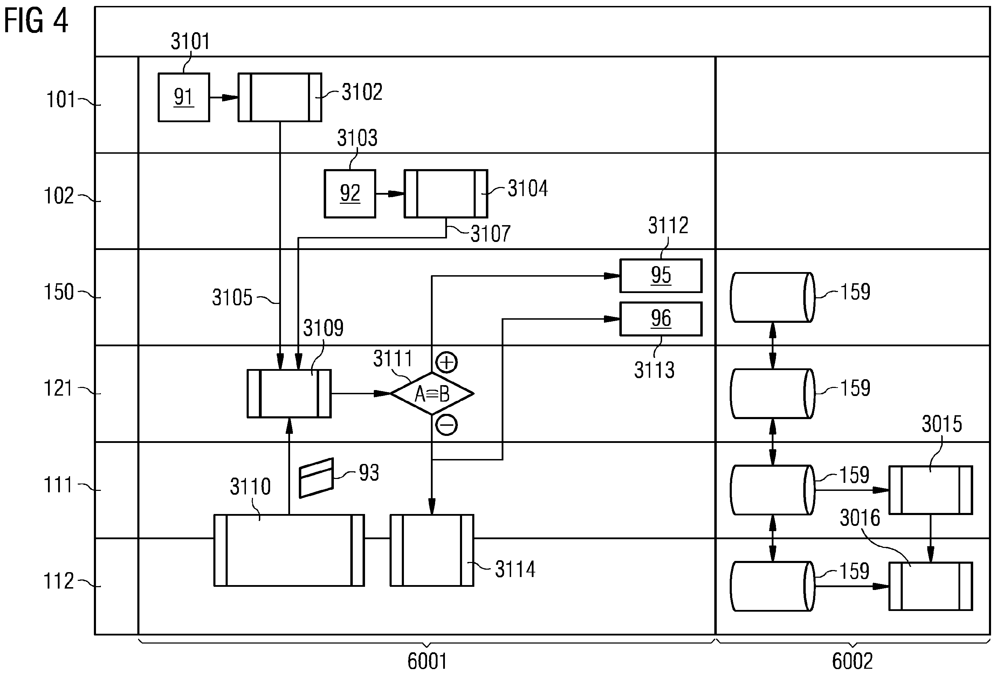

FIG. 4 is a functional flowchart illustrating details with respect to the functioning of the system 70 according to FIG. 1. For example, the signaling in accordance with the example of FIG. 4 could implement the method as described in connection with FIG. 2, in particular when executed by the third-party node 121.

The example of FIG. 4 generally corresponds to the example of FIG. 3. However, in the example of FIG. 4, the comparison is not implemented by the blockchain infrastructure 150, but is rather implemented by the third-party node 121.

In FIG. 4, blocks 3101 and 3102 correspond to blocks 3001 and 3002 according to FIG. 3, respectively. Furthermore, blocks 3103 and 3104 correspond to blocks 3003 and 3004 according to FIG. 3.

At block 3105, the oracle 101 provides the measurement dataset 91 to the third-party node 121. At 3107, the oracle 102 provides the measurement dataset 92 to the third-party node 121.

Next, at block 3109, the third-party node 121 implements the comparison between the measurement dataset 91 and the measurement dataset 92. Again, this is based on the metric 93 obtained from a corresponding agreement 3110.

At block 3111, the result of the comparison is checked. Depending on the result, one or more validation measures are taken. In particular, block 3112 corresponds to block 3012 according to FIG. 3; block 3113 corresponds to block 3013 according to FIG. 3; and block 3114 corresponds to block 3014 according to FIG. 3.

In the example of FIG. 4, the application phase 6002 corresponds to the application phase 6002 of the example of FIG. 3.

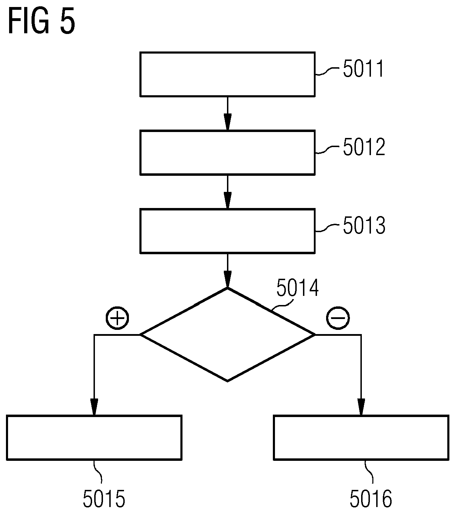

FIG. 5 is a flowchart of a method according to various examples. For example, the method of FIG. 5 could be executed by the control circuitry 105 of the oracle 102, e.g., upon loading program code from an associated memory.

At block 5011, second sensor data is captured. This can include obtaining a readout of a corresponding sensor, e.g., sensor 106 of the oracle 102 (cf. FIG. 1). For example, block 5011 can include sampling a corresponding physical observable at a sampling rate.

At block 5012, a first measurement dataset is obtained. For example, the measurement dataset 91 may be obtained from the oracle 101.

Next, at block 5013, a comparison is implemented between the first measurement dataset - obtained at block 5012 - and the second measurement dataset - captured at block 5011. Block 5013 as such corresponds to block 5003. In the example of FIG. 5, however, the comparison can be implemented locally at the respective oracle.

At block 5014, the result of the comparison is checked. Block 5014 corresponds to block 5004. Depending on the result of the comparison, one or more validation measures are taken. Here, blocks 5015, 5016 respectively correspond to blocks 5005, 5006.

The scenario of FIG. 5 allows to implement the comparison between the measurement datasets at a low level, i.e., in the signal processing chain close to the data source such as the sensor 106 of the respective oracle 101, 102 (cf. FIG. 1). This can have multiple advantages. Firstly, it would be possible to implement the comparison based on the measurement datasets including raw data points that have not been significantly pre-processed or compressed. For example, a high temporal resolution, without down sampling or low-pass filtering may be subject to the comparison. For example, it may not be required to implement significant analysis to the raw measurement data points, i.e., it may not be required to perform analysis such as object detection, feature detection, down sampling, etc., before implementing the comparison. The reason is that a high throughput, high-availability data communication link can exist between the multiple oracles (cf. FIG. 1: backbone communication line 72). A second advantage lies in the close temporal relationship between the capturing of the measurement datasets - e.g., at block 5011 - and the implementation of the comparison. This limits possible attack vectors: the time window available for manipulation of the measurement datasets is limited if compared to other scenarios in which the measurement datasets are compared by another node (e.g., by a mining node 151-153 of the blockchain infrastructure 150, such as explained in connection with FIG. 3; or a third-party node 121, as explained in connection with FIG. 4). This low-latency comparison can also be helpful in scenarios in which a service availability between the oracles and the respective nodes implementing the comparison (cf. FIG. 1: network 71) is significant; in such scenarios, a buffering of the measurement datasets at the oracles may be required and the comparison can be delayed which opens the attack vectors.

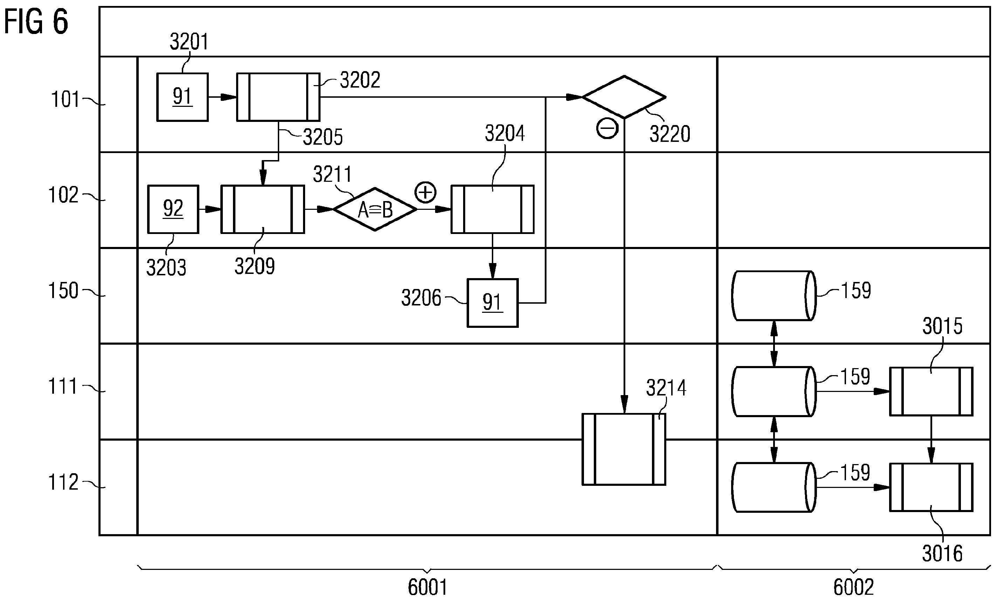

FIG. 6 is a functional flowchart illustrating details with respect to the functioning of the system 70 (cf. FIG. 1). For example, the signaling as illustrated in FIG. 6 could be used to implement the method according to FIG. 5.

At block 3201 the measurement dataset 91 is captured. At block 3202, the measurement dataset 91 is signed. Blocks 3201, 3202 thus corresponds to blocks 3001, 3002, respectively (cf. FIG. 3).

At block 3205, the oracle 101 provides the measurement dataset 91 to the oracle 102, e.g., via the backbone communication line 72.

At block 3203, the measurement dataset 92 is captured at the oracle 102. Block 3203 thus corresponds to block 3003 (cf. FIG. 3).

At block 3209, the comparison between the measurement dataset 91 and the measurement dataset 92 is performed at the oracle 102. Block 3209 thus corresponds to block 3009 (cf. FIG. 3).

At block 3211, a result of the comparison is checked and, depending on the result, one or more validation measures are selectively triggered.

In the example of FIG. 6, in case of a positive result of the comparison 3211 - i.e., consensus between the oracles 101, 102 - the measurement dataset 91 (and, optionally, the measurement dataset 92) is stored in the blockchain 159, block 3206. Optionally, the measurement dataset 92 may be previously signed, at block 3204. As such, block 3204 corresponds to block 3004 (cf. FIG. 3).

To store the measurement dataset 91 (and optionally the measurement dataset 92), the oracle 102 provides the measurement dataset 91 (and, optionally, the measurement dataset 92) to the blockchain infrastructure 150 and the mining nodes 151-153 can chain a new block including a variable indicative of the measurement dataset 91 (and, optionally, the measurement dataset 92). As such, the storing of the variable indicative of the measurement dataset 91 in the blockchain 159 at block 3206 corresponds to a validation measure taken in case of a positive result of the comparison. As a general rule, it would be possible, alternatively or additionally to storing the variable indicative of the measurement dataset 91, to store a variable indicative of the measurement dataset 92 and/or a variable indicative of the result of the comparison, e.g., a flag (cf. FIG. 3: blocks 3012, 3013).

Next, at block 3220, the oracle 101 checks the variable in the blockchain 159. For example, the execution of block 3220 can be triggered by providing the measurement dataset 91 at 3205 to the oracle 102. Alternatively or additionally, block 3220 could be triggered by storing the measurement dataset 91 in the blockchain 159 at block 3206. For example, the smart contract 90 may transmit a respective notification to the oracle 101.

Block 3220, i.e., the check implemented by the oracle 101, provides for a measure to verify whether consensus has been validated. If the check at block 3220 yields a negative result, the oracle 101 can trigger a settlement process as block 3214. Block 3214 corresponds to block 3014 (cf. FIG. 3).

The application phase 6002 of the example of FIG. 6 corresponds to the application phase 6002 of FIG. 3.

Summarizing, above, techniques have been described which enable to validate consensus between multiple oracles, e.g., between the oracles 101 and 102 according to the system 70 of FIG. 1. The consensus can be validated by implementing a comparison between respective measurement datasets. As has been described, according to the various examples multiple options are available for implementing the comparison. In particular, the node and/or a point in time at which the comparison is implemented can vary from option to option. For example, a comparison can be implemented at the oracles (cf. FIG. 6), thereby facilitating a low-level comparison of raw measurement data points and in a close temporal context with the capturing of the measurement data points. It would also be possible to implement the comparison at a central authority that is independently operated from the stakeholders of any application implemented based on the measurement datasets, e.g., using a third-party node (cf. FIG. 4) or a smart contract implemented in the blockchain (cf. FIG. 3).

As a general rule, the techniques described herein may find application in various use-case scenarios. To give a few examples: it would be possible to implement pay-per-use scenarios in electrical power grids. Here, a first oracle may capture measurement datasets indicative of electrical characteristics such as electrical current or electrical voltage of an electrical load, e.g., a pump, connected to the electrical power grid. A second oracle may capture a measurement dataset indicative of another physical observable, e.g., operational characteristics of the load, in the scenario of the pump e.g. flow rate. Thus, multiple independent physical observables of one and the same event - here, operation of the pump - can be obtained. The stakeholders can be associated with the operator of the pump, i.e., the consumer, and the operator of the power grid, i.e., the service provider. Both can have an interest in accurate determination of the electrical power consumption of the pump.

Another use case relates to lifecycle monitoring of an industrial field device, e.g., to determine warranty claims, second-life applications, residual value, leasing or rent royalties, etc. Here, the event can be an oil change at the industrial field device. A first oracle can capture measurement datasets indicative of a user input to a human machine interface of the industrial field device, e.g., pertaining to activation of a service mode associated with the oil change. This would be a software oracle. A second hardware oracle could capture measurement datasets that are indicative of a switch activation at the cover lid of the oil tank of the industrial field device. The comparison can then be based on a plausibility analysis between both measurement datasets. A further measurement dataset associated with a further physical observable could relate to the current consumption of the industrial field device, because it can be expected that the load imposed by the industrial field device is reduced in response to the oil change.

A third use case pertains to tracking of shipping of goods. Here, a first oracle could capture measurement data that is indicative of a first radio frequency identity tag readout at dispatch; while a second oracle could capture a measurement dataset that is indicative of radio frequency identity tag readout at arrival.

Although the invention has been shown and described with respect to certain preferred embodiments, equivalents and modifications will occur to others skilled in the art upon the reading and understanding of the specification. The present invention is defined by the appended claims.

For illustration, above, various scenarios have been described in which the comparison is implemented in the validation phase 6001 prior to the application phase 6002.

However, in various examples, it would be possible to co-implement the validation phase 6001 and the application phase 6002, cf. FIG. 7. In FIG. 7, a separate capturing phase 6000 is defined in which the measurement datasets 91, 92 are captured by the oracles 101, 102 and respectively written to the blockchain 159. In FIG. 7, blocks 3301 - 3308 correspond to blocks 3001 - 3008 (cf. FIG. 3), respectively.

In the scenario of FIG. 7, the comparison could be co-implemented with the functionality at block 3015 and/or block 3016, i.e., as additional blocks 3351 and/or 3352. Then, depending on a check of the result of these comparisons at blocks 3353 and/or 3355, a respective settlement process may be triggered at block 3354, as a validation measure.

For further illustration, various examples have been described above in connection with an implementation of the blockchain as the blockchain 159. Similar techniques may be readily applied for other kinds and types of blockchains.

Furthermore, various examples have been described in which separate mining nodes 151-153 of the blockchain infrastructure 150 are available to store datasets or data in the blockchain 159. In other examples, it would be possible that the oracles 101, 102 also implement mining functionality, i.e., can directly store the datasets or data into the blockchain 159.

## Claims

1. A method, comprising:
- obtaining, at a second measurement device (102), a first measurement dataset (91) indicative of one or more first observables (85) of an event (81), the first measurement dataset (91) being provided by a first measurement device (101),
- capturing, at the second measurement device (102), a second measurement dataset (92) indicative of one or more second observables (86) of the event (81),
wherein the one or more first observables (85) are different from the one or more second observables (86),
- performing, at the second measurement device (102), a comparison between the first measurement dataset (91) and the second measurement dataset (92), and
- depending on a result of the comparison: selectively triggering one or more validation measures for at least one of the first measurement dataset (91) or the second measurement dataset (92), the one or more validation measures being implemented at a distributed database (159),
wherein the one or more validation measures comprise storing a variable indicative of at least one of the results of the comparison, the first measurement dataset (91), and the second measurement dataset (92) in the distributed database (159) and
- the first measurement device (101) checking the variable.

2. The method of claim 1,
wherein the one or more validation measures comprise triggering a settlement process based on a deviation between the first measurement dataset (91) and the second measurement dataset (92).

3. The method of one of claims 1 or 2,
wherein the comparison is based on a predefined agreement indicative of a metric (93) of the comparison.

4. The method of claim 3,
wherein the metric (93) is based on at least one of
(i) a time-shift between capturing of the one or more first observables (85) and capturing of the one or more second observables (86), and
(ii) a tolerance range between the first measurement dataset (91) and the second measurement dataset (92).

5. A node, comprising a communication interface and at least one processor, wherein the at least one processor is configured to:
- obtain, via the communication interface and from a first measurement device (101), a first measurement dataset (91) indicative of one or more first observables (85) of an event (81),
- obtain, via the communication interface and from a second measurement device (102), a second measurement dataset (92) indicative of one or more second observables (86) of the event (81),
wherein the one or more first observables (85) are different from the one or more second observables (86),
- trigger a comparison between the first measurement dataset (91) and the second measurement dataset (92), and
- depending on a result of the comparison: selectively trigger one or more validation measures for at least one of the first measurement dataset (91) or the second measurement dataset (92), the one or more validation measures being implemented at a distributed database (159)
wherein the one or more validation measures comprise storing a variable indicative of at least one of the results of the comparison, the first measurement dataset (91), and the second measurement dataset (92) in the distributed database (159) and
- the first measurement device (101) checking the variable.

6. A measurement device, comprising a communication interface and at least one processor, wherein the at least one processor is configured to:
- obtain, via the communication interface and from a further measurement device, a first measurement dataset (91) indicative of one or more first observables (85) of an event (81),
- capture a second measurement dataset (92) indicative of one or more second observables (86) of the event (81), wherein the one or more first observables (85) are different from the one or more second observables (86),
- perform a comparison between the first measurement dataset (91) and the second measurement dataset (92), and
- depending on a result of the comparison: selectively trigger one or more validation measures for at least one of the first measurement dataset (91) or the second measurement dataset (92), the one or more validation measures being implemented at a distributed database (159)
wherein the one or more validation measures comprise storing a variable indicative of at least one of the results of the comparison, the first measurement dataset (91), and the second measurement dataset (92) in the distributed database (159) and
- the further measurement device (101) checking the variable.

## Patentansprüche

1. Verfahren, das Folgendes umfasst:
- Erhalten eines ersten Messdatensatzes (91), der eine oder mehrere erste Observablen (85) eines Ereignisses (81) angibt, an einer zweiten Messvorrichtung (102), wobei der erste Messdatensatz (91) von einer ersten Messvorrichtung (101) bereitgestellt wird,
- Erfassen eines zweiten Messdatensatzes (92), der eine oder mehrere zweite Observablen (86) des Ereignisses (81) angibt, an der zweiten Messvorrichtung (102),
wobei sich die eine oder die mehreren ersten Observablen (85) von der einen oder den mehreren zweiten Observablen (86) unterscheiden,
- Durchführen eines Vergleichs zwischen dem ersten Messdatensatz (91) und dem zweiten Messdatensatz (92) an der zweiten Messvorrichtung (102) und
- in Abhängigkeit von einem Ergebnis des Vergleichs: gezieltes Auslösen einer oder mehrerer Validierungsmaßnahmen für den ersten Messdatensatz (91) und/oder den zweiten Messdatensatz (92), wobei die eine oder die mehreren Validierungsmaßnahmen in einer verteilten Datenbank (159) implementiert werden,
wobei die eine oder die mehreren Validierungsmaßnahmen das Speichern einer Variablen, die die Ergebnisse des Vergleichs, den ersten Messdatensatz (91) und/oder den zweiten Messdatensatz (92) angibt, in der verteilten Datenbank (159) umfassen, und
- Überprüfen der Variablen durch die erste Messvorrichtung (101).

2. Verfahren nach Anspruch 1,
wobei die eine oder die mehreren Validierungsmaßnahmen das Auslösen eines Ausgleichsprozesses auf der Grundlage einer Abweichung zwischen dem ersten Messdatensatz (91) und dem zweiten Messdatensatz (92) umfassen.

3. Verfahren nach Anspruch 1 oder 2,
wobei der Vergleich auf einer vorgegebenen Übereinstimmung basiert, die eine Metrik (93) für den Vergleich angibt.

4. Verfahren nach Anspruch 3,
wobei die Metrik (93) auf
(i) einer Zeitverschiebung zwischen dem Erfassen der einen oder der mehreren ersten Observablen (85) und dem Erfassen der einen oder der mehreren zweiten Observablen (86) und/oder
(ii) einem Toleranzbereich zwischen dem ersten Messdatensatz (91) und dem zweiten Messdatensatz (92) basiert.

5. Knoten, der eine Kommunikationsschnittstelle und mindestens einen Prozessor umfasst, wobei der mindestens eine Prozessor so konfiguriert ist, dass er:
- über die Kommunikationsschnittstelle und aus einer ersten Messvorrichtung (101) einen ersten Messdatensatz (91) erhält, der eine oder mehrere erste Observablen (85) eines Ereignisses (81) angibt,
- über die Kommunikationsschnittstelle und aus einer zweiten Messvorrichtung (102) einen zweiten Messdatensatz (92) erhält, der eine oder mehrere zweite Observablen (86) eines Ereignisses (81) angibt,
wobei sich die eine oder die mehreren ersten Observablen (85) von der einen oder den mehreren zweiten Observablen (86) unterscheiden,
- einen Vergleich zwischen dem ersten Messdatensatz (91) und dem zweiten Messdatensatz (92) auslöst und
- in Abhängigkeit von einem Ergebnis des Vergleichs: gezielt eine oder mehrere Validierungsmaßnahmen für den ersten Messdatensatz (91) und/oder den zweiten Messdatensatz (92) auslöst, wobei die eine oder die mehreren Validierungsmaßnahmen in einer verteilten Datenbank (159) implementiert werden,
wobei die eine oder die mehreren Validierungsmaßnahmen das Speichern einer Variablen, die die Ergebnisse des Vergleichs, den ersten Messdatensatz (91) und/oder den zweiten Messdatensatz (92) angibt, in der verteilten Datenbank (159) umfassen, und
- die Variable von der ersten Messvorrichtung (101) überprüft wird.

6. Messvorrichtung, die eine Kommunikationsschnittstelle und mindestens einen Prozessor umfasst, wobei der mindestens eine Prozessor so konfiguriert ist, dass er:
- über die Kommunikationsschnittstelle und aus einer weiteren Messvorrichtung einen ersten Messdatensatz (91) erhält, der eine oder mehrere erste Observablen (85) eines Ereignisses (81) angibt,
- einen zweiten Messdatensatz (92) erfasst, der eine oder mehrere zweite Observablen (86) des Ereignisses (81) angibt, wobei sich die eine oder die mehreren ersten Observablen (85) von der einen oder den mehreren zweiten Observablen (86) unterscheiden,
- einen Vergleich zwischen dem ersten Messdatensatz (91) und dem zweiten Messdatensatz (92) durchführt und
- in Abhängigkeit von einem Ergebnis des Vergleichs: gezielt eine oder mehrere Validierungsmaßnahmen für den ersten Messdatensatz (91) und/oder den zweiten Messdatensatz (92) auslöst, wobei die eine oder die mehreren Validierungsmaßnahmen in einer verteilten Datenbank (159) implementiert werden,
wobei die eine oder die mehreren Validierungsmaßnahmen das Speichern einer Variablen, die die Ergebnisse des Vergleichs, den ersten Messdatensatz (91) und/oder den zweiten Messdatensatz (92) angibt, in der verteilten Datenbank (159) umfassen, und
- die Variable von der weiteren Messvorrichtung (101) überprüft wird.

## Revendications

1. Procédé, comprenant :
- l'obtention, au niveau d'un second dispositif de mesure (102), d'un premier ensemble de données de mesure (91) indicatif d'une ou de plusieurs premières observables (85) d'un événement (81), le premier ensemble de données de mesure (91) étant fourni par un premier dispositif de mesure (101),
- la capture, au niveau du second dispositif de mesure (102), d'un second ensemble de données de mesure (92) indicatif d'une ou de plusieurs secondes observables (86) de l'événement (81),
dans lequel les une ou plusieurs premières observables (85) sont différentes des une ou plusieurs secondes observables (86),
- la réalisation, au niveau du second dispositif de mesure (102), d'une comparaison entre le premier ensemble de données de mesure (91) et le second ensemble de données de mesure (92), et
- en fonction d'un résultat de la comparaison : le déclenchement de manière sélective d'une ou de plusieurs mesures de validation pour au moins l'un parmi le premier ensemble de données de mesure (91) ou le second ensemble de données de mesure (92), les une ou plusieurs mesures de validation étant mises en œuvre au niveau d'une base de données distribuée (159),
dans lequel les une ou plusieurs mesures de validation comprennent le stockage d'une variable indicative d'au moins l'un parmi les résultats de la comparaison, le premier ensemble de données de mesure (91) et le second ensemble de données de mesure (92) dans la base de données distribuée (159) et
- le premier dispositif de mesure (101) vérifiant la variable.

2. Procédé selon la revendication 1,
dans lequel les une ou plusieurs mesures de validation comprennent le déclenchement d'un processus de règlement sur la base d'un écart entre le premier ensemble de données de mesure (91) et le second ensemble de données de mesure (92).

3. Procédé selon l'une des revendications 1 ou 2,
dans lequel la comparaison est basée sur un accord prédéfini indicatif d'une métrique (93) de la comparaison.

4. Procédé selon la revendication 3,
dans lequel la métrique (93) est basée sur au moins l'un parmi
(i) un décalage temporel entre la capture des une ou plusieurs premières observables (85) et la capture des une ou plusieurs secondes observables (86), et
(ii) une plage de tolérance entre le premier ensemble de données de mesure (91) et le second ensemble de données de mesure (92).

5. Nœud, comprenant une interface de communication et au moins un processeur, dans lequel l'au moins un processeur est configuré pour :
- obtenir, via l'interface de communication et en provenance d'un premier dispositif de mesure (101), un premier ensemble de données de mesure (91) indicatif d'une ou de plusieurs premières observables (85) d'un événement (81),
- obtenir, via l'interface de communication et en provenance d'un second dispositif de mesure (102), un second ensemble de données de mesure (92) indicatif d'une ou de plusieurs secondes observables (86) de l'événement (81),
dans lequel les une ou plusieurs premières observables (85) sont différentes des une ou plusieurs secondes observables (86),
- déclencher une comparaison entre le premier ensemble de données de mesure (91) et le second ensemble de données de mesure (92), et
- en fonction d'un résultat de la comparaison : déclencher de manière sélective une ou plusieurs mesures de validation pour au moins l'un parmi le premier ensemble de données de mesure (91) ou le second ensemble de données de mesure (92), les une ou plusieurs mesures de validation étant mises en œuvre au niveau d'une base de données distribuée (159)
dans lequel les une ou plusieurs mesures de validation comprennent le stockage d'une variable indicative d'au moins l'un parmi les résultats de la comparaison, le premier ensemble de données de mesure (91) et le second ensemble de données de mesure (92) dans la base de données distribuée (159) et
- le premier dispositif de mesure (101) vérifiant la variable.

6. Dispositif de mesure, comprenant une interface de communication et au moins un processeur, dans lequel l'au moins un processeur est configuré pour :
- obtenir, via l'interface de communication et en provenance d'un dispositif de mesure supplémentaire, un premier ensemble de données de mesure (91) indicatif d'une ou de plusieurs premières observables (85) d'un événement (81),
- capturer un second ensemble de données de mesure (92) indicatif d'une ou de plusieurs secondes observables (86) de l'événement (81),
dans lequel les une ou plusieurs premières observables (85) sont différentes des une ou plusieurs secondes observables (86),
- réaliser une comparaison entre le premier ensemble de données de mesure (91) et le second ensemble de données de mesure (92), et
- en fonction d'un résultat de la comparaison : déclencher de manière sélective une ou plusieurs mesures de validation pour au moins l'un parmi le premier ensemble de données de mesure (91) ou le second ensemble de données de mesure (92), les une ou plusieurs mesures de validation étant mises en œuvre au niveau d'une base de données distribuée (159)
dans lequel les une ou plusieurs mesures de validation comprennent le stockage d'une variable indicative d'au moins l'un parmi les résultats de la comparaison, le premier ensemble de données de mesure (91) et le second ensemble de données de mesure (92) dans la base de données distribuée (159) et
- le dispositif de mesure supplémentaire (101) vérifiant la variable.
